# EUROPEAN PATENT SPECIFICATION

(11) **EP 1 571 368 B1**
(45) Date of publication and mention of the grant of the patent: **15.10.2008**
(21) Application number: 04468021.3
(22) Date of filing: 26.11.2004
(51) Int. Cl.: F16F 9/00, A61F 2/36

(54) **Method for absorbing impulse of force**
Methode zur Absorption von einem Kraftimpuls
Méthode pour l'absorption d'un impulse de force

(30) Priority: 03.03.2004 SI 200400070
(43) Date of publication of application: 07.09.2005
(73) Proprietor: Copf, Franz, 4260 Bled (SI); Petresin, Eugen, 1000 Ljubljana (SI); Copf, Peter, 4260 Bled (SI); Braun, Knut, 66123 Saarbrücken (DE); Pisot, Venceslav, 6280 Ankaran (SI); Unior Kovaska industrija d.d., 3214 Zrece (SI); Javornik, Danijel, 2317 Oplotnica (SI)
(72) Inventor: Copf, Franz, 4260 Bled (SI); Petresin, Eugen, 1000 Ljubljana (SI); Copf, Peter, 4260 Bled (SI); Braun, Knut, 66123 Saarbrücken (DE); Pisot, Venceslav, 6280 Ankaran (SI); Unior Kovaska industrija d.d., 3214 Zrece (SI); Javornik, Danijel, 2317 Oplotnica (SI)
(74) Representative: Gros, Mladen

(56) References cited:
- WO-A-02/21013
- WO-A-20/04022999

## Description

The invention concerns a method for absorbing an impulse of force, according to which the impulse of force is absorbed in a series of several steps in order to achieve an extended duration of absorbing the impulse of force as well as a lower peak value of the force acting during this process.

The invention solves the technical problem how to define a method for absorbing an impulse of force in such a way that the impulse of force will be gradually absorbed in a series of several steps, supposedly imitating the process of absorbing an impulse of force within the human bone structure exposed to shock-like loads.

There are known methods for absorbing an impulse of force by means of a fluid to which the impulse of force is transferred as an impulse of pressure, which thereafter propagates like a shock wave through the fluid and gets absorbed by absorbing sites, yielding walls and in similar ways. WO-A-02/21013 disclose such methods and WO-A-2004/022999. However, the peak value force acting during the absorption process is quite substantial if such methods are carried out in specially provided shock absorbers of acceptable linear dimensions.

Said technical problem is solved by the method of the invention as characterized by features from the characterizing part of the first claim, whereas its variant embodiments are specified by dependent claims.

The method of the invention is distinguished for its gradual absorption of an impulse of force in a series of several steps, supposedly imitating such process occurring within the human bone structure when exposed to shock-like loads.

The invention will now be explained by way of the description of an embodiment and its variants.

An impulse of force acts on a piston, which is movable along a tube in a fluid tight way and which produces an impulse of pressure in a system behind it - upon this system the method of the invention is performed. According to the method of the invention, said impulse of pressure is absorbed in the following steps.

The impulse of pressure is produced immediately below the piston, namely within a layer of a porous resilient fibrous material containing a fluid. Said layer is permeable to the fluid and is fastened to an inner wall of said tube along a low-pressure - with regard to the direction of the pressure impulse propagation - layer contour.

The impulse of pressure is transferred further to a first fluid layer lying behind said layer of the porous resilient fibrous material.

Then the impulse of pressure is transferred further to an adjacent layer of a nonporous resilient fibrous material and of a fluid contained therein. Said layer, too, which is fastened to the inner wall of said tube along the whole layer contour, is permeable to fluid so that the impulse of pressure is transferred further to a second fluid layer.

Herefrom the impulse of pressure is transferred further to an adjacent first permeable porous layer consisting of a plurality of compartments fastened to each other and filled up with the fluid. The linear size of said compartments is far below the thickness of the first permeable porous layer. Membrane-like walls of the compartments are deformable and they are provided with at least two through-holes in each compartment, said through-holes being each shifted with respect to another in the direction of the propagation of the impulse of pressure. Said compartments represent an analogy to *tensulas* in the structure of the head of femur.

The impulse of pressure is then transferred further to an adjacent first layer of a plurality of springs with their interspaces filled with a fluid. Said springs are arranged next to one another and oriented along the lines of the propagation of the impulse of pressure. Their high-pressure end leanes against the low-pressure surface of the first permeable porous layer and their low-pressure end leanes against the high-pressure surface of a second permeable porous layer.

Thereafter the impulse of pressure is transferred further to the adjacent second permeable porous layer, which has a construction similar to that of the first permeable porous layer, however, the linear size of its compartments is larger than in the first permeable porous layer.

In the next step, the impulse of pressure is transferred further to a second layer of a plurality of springs arranged next to one another and oriented along the lines of a propagation of the impulse of pressure. Their high-pressure end leanes against the low-pressure surface of the second permeable porous layer and their low-pressure end leanes against the high-pressure surface of a third permeable porous layer, the space between the springs, however, is filled up with a fluid.

In the next steps the impulse of pressure is absorbed differently according to the embodiment chosen.

In a basic embodiment of the method according to the invention the impulse of pressure is transferred through alternate further permeable porous layers and further layers of springs up to the last permeable porous layer having a construction similar to that of the first permeable porous layer except for the linear size of its compartments, which is larger than that in the penultimate permeable porous layer.

In another embodiment of the method according to the invention, however, the impulse of pressure is transferred through alternate further permeable porous layers and further layers of springs up to a last permeable layer, which consists of columns being positioned apart from one another and oriented along the lines of the propagation of the impulse of pressure and of a last actually permeable porous layer having a construction similar to that of the mentioned permeable porous layer, which fills the space between the columns. Each column consists of a plurality of closed cells, e.g. of a pentagonide form, which are fastened to each other and fill up the entire column volume. The cells have deformable membrane-like walls and are filled up with a medium having a compressibility higher than the said fluid. The linear size of the compartments of the last actually permeable porous layer is larger than in the penultimate permeable porous layer. Each compartment positioned next to any column is fastened to the column with some of its walls.

The high-pressure part of the contour of the first permeable porous layer and the low-pressure part of the contour of the last permeable porous layer are fastened to the inner wall of said tube.

In the last step of the method of the invention, the impulse of pressure is transferred still further to the fluid situated next to the low-pressure surface of the last permeable porous layer.

A liquid or a gas may be used as the fluid in performing the method of the invention for absorbing the impulse of force.

## Claims

1. Method for absorbing an impulse of force exerted on a piston, which is movable along a tube in a fluid-tight way, **characterized in**
**that** the piston produces an impulse of pressure within an adjacent layer of a porous resilient fibrous material,
which contains a fluid and which is permeable to fluid and
which, along its low-pressure contour, is fastened to an inner wall of said tube,
**that** the impulse of pressure is transferred further to an adjacent first fluid layer,
**that** the impulse of pressure is transferred further to an adjacent layer of a nonporous resilient fibrous material,
which contains the fluid and which is permeable to the fluid and
which, along its whole contour, is fastened to the inner wall of said tube,
**that** the impulse of pressure is transferred further to an adjacent second fluid layer,
**that** the impulse of pressure is transferred further to an adjacent first permeable porous layer,
which consists of a plurality of compartments fastened to each other,
which are filled up with the fluid,
their linear size being far below the thickness of the first permeable porous layer and
their membrane-like walls being deformable and
their walls in any of the compartments being provided with at least two through holes, shifted with respect to each other in the direction of the propagation of the impulse of pressure,
**that** the impulse of pressure is transferred further to an adjacent first layer of a plurality of springs,
the springs being arranged next to one another and oriented along the lines of the propagation of the impulse of pressure,
their high-pressure end leaning against the low-pressure surface of the first permeable porous layer and
their low-pressure end leaning against the high-pressure surface of a second permeable porous layer and
the space between the springs being filled up with the fluid,
**that** the impulse of pressure is transferred further to the adjacent second permeable porous layer,
which has a construction similar to that of the first permeable porous layer,
the linear size of its compartments being larger than that in the first permeable porous layer,
**that** the impulse of pressure is transferred further to an adjacent second layer of a plurality of springs,
the springs being arranged next to each other and oriented along the lines of the propagation of the impulse of pressure,
their high-pressure end leaning against the low-pressure surface of the second permeable porous layer and
their low-pressure end leaning against the high-pressure surface of a third permeable porous layer and
the space between the springs being filled up with the fluid,
**that** the impulse of pressure is transferred through alternate further permeable porous layers and further layers of springs up to a last permeable porous layer,
**that** the impulse of pressure is transferred further to the fluid situated next to the low-pressure surface of the last permeable porous layer,
whereat the high-pressure part of the contour of the first permeable porous layer and the low-pressure part of the contour of the last permeable porous layer are fastened to the inner wall of said tube.

2. Method for absorbing an impulse of force as recited in claim 1, **characterized in**
**that** the last permeable porous layer has a construction similar to that of the first permeable porous layer, the linear size of its compartments being larger than in the penultimate permeable porous layer.

3. Method for absorbing an impulse of force as recited in claim 1, **characterized in**
**that** the last permeable porous layer consists of columns positioned apart from one another and oriented along the lines of the propagation of the impulse of pressure and each column consisting of a plurality of closed cells, which are fastened to each other and fill up the entire column volume and have deformable membrane-like walls and are filled up with a medium having a compressibility higher than that of the said fluid, and of a last actually permeable porous layer which fills up the space among said columns and has a construction similar to that of the first permeable porous layer, the linear size of its compartments being larger than that in the penultimate permeable porous layer, and whereof each compartment positioned at any column is fastened to the column with some of its walls.

4. Method for absorbing an impulse of force as recited in any of claims 1 to 3,
**characterized in**
**that** the fluid is a liquid.

5. Method for absorbing an impulse of force as recited in any of claims 1 to 3,
**characterized in**
**that** the fluid is a gas.

## Patentansprüche

1. Verfahren zum Auffangen eines Kraftstosses,
der auf einen auf eine fluiddichtende Weise entlang eines Rohres beweglichen Kolben ausgeübt wird,
**dadurch gekennzeichnet,**
**dass** der Kolben einen Druckstoss innerhalb einer angrenzenden Schicht eines porösen elastisch nachgiebigen faserartigen Materials,
das ein Fluid enthält und für das Fluid durchlässig und
an seinem niederdruckseitigen Umfang an einer inneren Wand des genannten Rohres befestigt ist, hervorbringt,
**dass** der Druckstoss sich weiter auf eine angrenzende erste Fluidschicht versetzt,
**dass** der Druckstoss sich weiter auf eine angrenzende Schicht eines porenfreien elastisch nachgiebigen faserartigen Materials,
das das Fluid enthält und für das Fluid durchlässig ist und
das entlang seines ganzen Umfangs an der inneren Wand des genannten Rohres befestigt ist, versetzt,
**dass** der Druckstoss sich weiter auf eine angrenzende zweite Fluidschicht versetzt,
**dass** der Druckstoss sich weiter auf eine angrenzende erste fluiddurchlässige poröse Schicht,
die aus einer Vielzahl von aneinander befestigten Kammern besteht,
die mit dem Fluid aufgefüllt sind,
derer lineare Abmessung weit unter der Dicke der ersten fluiddurchlässigen porösen Schicht liegt und
derer membranenartige Wände verformbar und
derer Wände in jeder der Kammern mit wenigstens zwei Durchgangslöchern versehen sind,
die in der Richtung der Fortplanzung des Druckstosses gegeneinander verschoben sind, versetzt,
**dass** der Druckstoss sich weiter auf eine angrenzende erste Schicht einer Vielzahl von Federn,
die nebeneinander angeordnet und entlang der Linien der Fortplanzung des Druckstosses ausgerichtet und
hochdruckseitig an die niederdruckseitige Oberfläche der ersten fluiddurchlässigen porösen Schicht angelehnt und
niederdruckseitig an eine hochdruckseitige Oberfläche einer zweiten fluiddurchlässigen porösen Schicht angelehnt sind und
der Raum unter denen mit dem Fluid ausgefüllt ist, versetzt,
**dass** der Druckstoss sich weiter auf die angrenzende zweite fluiddurchlässige poröse Schicht,
die der ersten fluiddurchlässigen porösen Schicht aufbaumässig ähnlich ist,
doch deren Kammern eine grössere lineare Abmessung als jene in der ersten fluiddurchlässigen porösen Schicht haben,
**dass** der Druckstoss sich weiter auf eine angrenzende zweite Schicht einer Vielzahl von Federn versetzt,
die nebeneinander angeordnet und entlang der Linien der Fortplanzung des Druckstosses ausgerichtet und
die hochdruckseitig an die niederdruckseitige Oberfläche der zweiten fluiddurchlässigen porösen Schicht angelehnt sind und
die niederdruckseitig an eine hochdruckseitige Oberfläche einer dritten fluiddurchlässigen porösen Schicht angelehnt sind und
der Raum unter denen mit dem Fluid ausgefüllt ist, versetzt,
**dass** der Druckstoss sich weiter durch abwechselnde weitere fluiddurchlässige poröse Schichten und weitere Schichten von Federn bis zu einer letzten fluiddurchlässigen porösen Schicht versetzt,
**dass** der Druckstoss sich weiter auf das eine niederdruckseitige Oberfläche der letzten fluiddurchlässigen porösen Schicht angrenzende Fluid,
wobei der hochdruckseitige Teil des Umfangs der ersten fluiddurchlässigen porösen Schicht und
der niederdruckseitige Teil des Umfangs der letzten fluiddurchlässigen porösen Schicht
an die innere Wand des genannten Rohres befestigt sind, versetzt.

2. Verfahren zum Auffangen des Kraftstosses nach Anspruch 1,
**dadurch gekennzeichnet,**
**dass** die letzte fluiddurchlässige poröse Schicht
der ersten fluiddurchlässigen porösen Schicht aufbaumässig ähnlich ist,
doch ihre Kammern eine grössere lineare Abmessung als jene in der vorletzten fluiddurchlässigen porösen Schicht haben.

3. Verfahren zum Auffangen des Kraftstosses nach Anspruch 1,
**dadurch gekennzeichnet,**
**dass** die letzte fluiddurchlässige poröse Schicht
aus Säulen,
die voneinander entfernt und entlang der Linien der Fortplanzung des Druckstosses ausgerichtet sind und
von denen jede aus einer Vielzahl von aneinander befestigten geschlossenen Kammern besteht,
die das ganze Säulenvolumen ausfüllen und
derer membranenartige Wände verformbar und
die mit einem Mittel voll aufgefüllt sind,
dessen Verdichtbarkeit höher als jene des genannten Fluids ist, und
aus einer letzten tatsächlich fluiddurchlässigen porösen Schicht,
die den Raum unter den genannten Säulen ausfüllt und
die der ersten fluiddurchlässigen porösen Schicht aufbaumässig ähnlich ist,
doch deren Kammern eine grössere lineare Abmessung als jene in der vorletzten fluiddurchlässigen porösen Schicht haben und
jede deren, an irgendeiner Säule gelegenen Kammern an der Säule mit einer ihrer Wände befestigt ist, besteht.

4. Verfahren zum Auffangen des Kraftstosses nach einem der Ansprüche 1 bis 3,
**dadurch gekennzeichnet,**
**dass** das Fluid eine Flüssigkeit ist.

5. Verfahren zum Auffangen des Kraftstosses nach einem der Ansprüche 1 bis 3,
**dadurch gekennzeichnet,**
**dass** das Fluid ein Gas ist.

## Revendications

1. Procédé pour absorber une impulsion de force exercée sur un piston, qui est mobile le long d'un tube de manière étanche pour fluides, **caractérisé**
**en ce que** le piston produit une impulsion de pression dans une couche adjacente d'une matière fibreuse élastique poreuse,
qui contient un fluide et qui est perméable au fluide et
qui, le long de son contour à basse pression, est fixé à une paroi intérieure dudit tube,
**en ce que** l'impulsion de pression est transférée en outre à une première couche de fluide adjacente,
**en ce que** l'impulsion de pression est transférée en outre à une couche adjacente d'une matière fibreuse élastique non poreuse,
qui contient le fluide et qui est perméable au fluide et
qui, le long de tout son contour, est fixé à la paroi intérieure dudit tube,
**en ce que** l'impulsion de pression est transférée en outre à une seconde couche de fluide adjacente,
**en ce que** l'impulsion de pression est transférée en outre à une première couche poreuse perméable adjacente,
qui consiste en une pluralité de compartiments fixés les uns aux autres,
qui sont remplis du fluide,
leur dimension linéaire étant bien en dessous de l'épaisseur de la première couche poreuse perméable et
leurs parois analogues à des membranes étant déformables et
leurs parois dans l'un quelconque des compartiments étant pourvues d'au moins deux trous traversants, décalés l'un par rapport à l'autre dans la direction de propagation de l'impulsion de pression,
**en ce que** l'impulsion de pression est transférée en outre à une première couche adjacente d'une pluralité de ressorts,
les ressorts étant agencés les uns à côté des autres et orientés suivant les lignes de propagation de l'impulsion de pression,
leur extrémité à haute pression étant inclinée contre la surface à basse pression de la première couche poreuse perméable et
leur extrémité à basse pression étant inclinée contre la surface à haute pression d'une seconde couche poreuse perméable et
l'espace entre les ressorts étant rempli du fluide,
**en ce que** l'impulsion de pression est transférée en outre à la seconde couche poreuse perméable adjacente,
qui a une construction similaire à celle de la première couche poreuse perméable,
la dimension linéaire de ses compartiments étant plus grande que celle de la première couche poreuse perméable,
**en ce que** l'impulsion de pression est transférée en outre à une seconde couche adjacente d'une pluralité de ressorts,
les ressorts étant agencés les uns à côté des autres et orientés suivant les lignes de propagation de l'impulsion de pression,
leur extrémité à haute pression étant inclinée contre la surface à basse pression de la seconde couche poreuse perméable et
leur extrémité à basse pression étant inclinée contre la surface à haute pression d'une troisième couche poreuse perméable et
l'espace entre les ressorts étant rempli du fluide,
**en ce que** l'impulsion de pression est transférée par d'autres couches poreuses perméables alternant avec d'autres couches de ressorts jusqu'à une dernière couche poreuse perméable,
**en ce que** l'impulsion de pression est transférée en outre au fluide situé à côté de la surface à basse pression de la dernière couche poreuse perméable,
où la partie à haute pression du contour de la première couche poreuse perméable et la partie à basse pression du contour de la dernière couche poreuse perméable sont fixées à la paroi intérieure dudit tube.

2. Procédé pour absorber une impulsion de force selon la revendication 1, **caractérisé**
**en ce que** la dernière couche poreuse perméable a une construction similaire à celle de la première couche poreuse perméable, la dimension linéaire de ses compartiments étant supérieure à celle de l'avant-dernière couche poreuse perméable.

3. Procédé pour absorber une impulsion de force selon la revendication 1, **caractérisé**
**en ce que** la dernière couche poreuse perméable est constituée de colonnes positionnées à l'écart les unes des autres et orientées suivant les lignes de propagation de l'impulsion de pression et chaque colonne étant constituée d'une pluralité de cellules fermées, qui sont fixées les unes aux autres et qui occupent le volume entier de la colonne et ont des parois analogues à des membranes déformables et sont remplies d'un milieu ayant une compressibilité supérieure à celle dudit fluide, et d'une dernière couche poreuse réellement perméable qui remplit l'espace entre lesdites colonnes et a une construction similaire à celle de la première couche poreuse perméable, la dimension linéaire de ses compartiments étant plus grande que celle présente dans l'avant-dernière couche poreuse perméable, grâce à quoi chaque compartiment positionné dans n'importe quelle colonne est fixé à la colonne par certaines de ses parois.

4. Procédé pour absorber une impulsion de force selon l'une quelconque des revendications 1 à 3, **caractérisé**
**en ce que** le fluide est un liquide.

5. Procédé pour absorber une impulsion de pression selon l'une quelconque des revendications 1 à 3, **caractérisé**
**en ce que** le fluide est un gaz.
